# EUROPÄISCHE PATENTSCHRIFT

(11) **EP 2 057 916 B1**
(45) Veröffentlichungstag und Bekanntmachung des Hinweises auf die Patenterteilung: **13.10.2010**
(21) Anmeldenummer: 08168800.4
(22) Anmeldetag: 11.11.2008
(51) Int. Cl.: A47C 4/54, A47F 8/00

(54) **Aufblasbares Möbel**
Inflatable furniture
Meuble gonflable

(30) Priorität: 12.11.2007 AT 18222007
(43) Veröffentlichungstag der Anmeldung: 13.05.2009
(73) Patentinhaber: Braunböck, Andreas, 1140 Wien (AT); Munninger, Alexander, 4810 Gmunden (AT)
(72) Erfinder: Braunböck, Andreas, 1140 Wien (AT); Munninger, Alexander, 4810 Gmunden (AT)
(74) Vertreter: Babeluk, Michael

(56) Entgegenhaltungen:
- EP-A- 1 680 979
- JP-A- 9 140 502
- JP-A- 2007 159 681
- US-A- 3 125 377
- US-A- 5 778 581

## Beschreibung

Die Erfindung betrifft ein aufblasbares Möbel, vorzugsweise Tisch, Stehpult, Ablage, Hocker, Bank, Liege, Bett, oder Werbedisplay oder dgl., gemäß dem Oberbegriff von Patentanspruch 1.

Aufblasbare Möbel zeichnen sich dadurch aus, bei Bedarf rasch verfügbar zu sein, wobei nach dem Ablassen der Luft bei der Lagerung ein im Vergleich zu herkömmlichen Möbeln nur sehr geringer Platzbedarf anfällt.

Aus der DE 89 13 178 U1 ist beispielsweise ein aufblasbarer Picknicktisch bekannt, welcher nach dem Aufblasen einen zylindrischen Körper aufweist. Der Picknicktisch umfasst einen ebenen oberen Wandabschnitt mit einer Vielzahl becherartiger Öffnungen in unterschiedlicher Größe, einer Mittelöffnung für einen Strandschirm sowie einen zylindrischen Mantelbereich mit einer Vielzahl von Einkerbungen um den Mantelbereich in aufgeblasenem Zustand zu stabilisieren. Der gezeigte Picknicktisch ist allerdings anfällig für Beschädigungen und Verletzungen der aufblasbaren Hülle, sei es bei der Verwendung eines Essbestecks oder durch die Glut von Zigaretten etc.

Weiters ist aus der US 5,134,930 A ein aufblasbares Servicetablett bekannt, welches zur Gänze aus PVC oder einem weichen Plastikmaterial besteht, wobei lediglich ein kleiner, trapezförmiger Bereich ein den Boden versteifendes Element aufweist und von einem aufblasbaren Randwall umgeben ist. In diesem Randwall sind zwei Becherhalter eingearbeitet.

In diesem Zusammenhang ist aus der DE 91 11 104 U1 ein aufblasbarer Spieltisch bekannt, welcher aus vier in sich abgeschlossenen Luftkammern besteht, wobei jede Luftkammer für sich aufgeblasen und mit einem Stiftverschluss verschlossen wird. Die vier Luftkammern sind an den kurzen Seiten miteinander verbunden und bilden einen viereckigen Innenraum.

Die vier aneinandergefügten Luftkammern sind mit nach innen weisenden Anschlussfalzen zur Aufnahme einer Spielfläche und einer Bodenfläche ausgestattet, wobei die Verbindung der Spielfläche bzw. der Bodenfläche mit dem Anschlussfalz durch Schweißen oder Kleben hergestellt werden kann. Ein derartige hergestellter Spieltisch weist wulstförmige Außenränder auf, die die versenkte Spielfläche umrahmen und so ein Herunterfallen der Spielfiguren verhindern. Der Spieltisch wäre allerdings nur eingeschränkt als Esstisch, Stehpult etc., beispielsweise bei Ausstellungen, Messen oder Gartenfesten, verwendbar, da er zu fragil ausgeführt ist und die Gefahr einer Beschädigung durch ein Besteck oder durch Zigarettenglut zu groß ist.

Schließlich ist aus der US 6,823,801 B2 ein aufblasbarer Imbisstisch in Form eines Fußballs, Basketballs etc. bekannt, welcher einen Fußteil und am gegenüberliegenden Ende eine Aufnahme für einen herausnehmbaren Becher aufweist. Der Becher dient zur Aufnahme von Snacks und kann zur Reinigung auf einfache Weise aus seiner Aufnahme entfernt werden. Die Außenhülle des aufblasbarer Imbisstisches besteht beispielsweise aus einer Hülle, welche im Wesentlichen der äußeren Gestalt eines Fußballs entspricht, wobei im Inneren des Fußballs ein zylindrischer Hohlkörper vorgesehen ist, welcher an seinem oberen Ende in eine Aufnahme für den Becher übergeht. Die Außenhülle weist ein Einlassventil zum Aufpumpen des Imbisstisches auf, wobei der Innenraum des fußballförmigen Gebildes über Öffnungen mit dem Innenraum des zylindrischen Hohlkörpers und dem ebenfalls aufblasbaren Fußteil in Verbindung steht. Aufgrund der äußeren Form ist der Imbisstisch nur eingeschränkt verwendbar.

Aus der AT 409.209 B der Patentanmelder ist ein Möbelstück bekannt, das einen aufblasbaren Körper aufweist. Der aufblasbare Körper bildet dabei eine Halterung für eine Säule, an deren Oberseite eine Tischplatte befestigt ist. Eine weitere Lösung dieser Art ist in der US 5,778,581 A beschrieben. Diesen Lösungen ist gemeinsam, dass der mögliche Innendruck dadurch begrenzt ist, dass sich die Hülle, die den Hohlkörper begrenzt, übermäßig nach außen wölbt und sowohl das ästhetische Erscheinungsbild als auch die Funktion beeinträchtigt. Aufgrund der relativ geringen Stabilität sind Möbel dieser Art nur beschränkt einsetzbar.

Darüber hinaus zeigt die EP 1 680 979 A der Anmelder der vorliegenden Anmeldung ein aufblasbares Möbel, das viele der oben beschriebenen Nachteile vermeidet. Durch die funktionale Trennung zwischen dem mit Überdruck beaufschlagbaren Hohlkörper und einer zwischen den beiden Platten aufgespannten Mantelfläche können die einzelnen Materialien gezielt auf ihre Aufgabe optimiert werden und es können sehr hohe Drücke eingesetzt werden, um eine möglichst große Belastbarkeit zu erzielen. Die entsprechenden Möbelstücke lassen sich vielfältig und formschön gestalten und stellen neben ihrer eigentlichen Funktion auch Werbeflächen mit hohem Aufmerksamkeitswert dar. Nachteilig bei der Lösung ist jedoch, dass der Zusammenbau, bzw. das Aufblasen des Möbels sorgfältig durchgeführt werden muss, um Verspannungen zu vermeiden, die zu erhöhter Materialbelastung und störender Faltenbildung führen können.

Aufgabe der vorliegenden Erfindung ist es, diese Nachteile zu vermeiden und ein Möbel der oben genannten Art so weiterzubilden, dass auch beim Zusammenbau, bzw. Aufbau durch ungeübte Personen die Gefahr von Fehlern minimiert wird.

Erfindungsgemäß werden diese Aufgaben durch die Merkmale von Patentanspruch 1 gelöst, d.h., dass sich der Hohlkörper in dem mit Überdrück beaufschlagten Zustand über ein Drehgelenk an der Basisplatte und/oder an der Deckplatte abstützt. Dies bedeutet, dass die Basisplatte oder die Deckplatte grundsätzlich gegenüber dem Hohlkörper verdrehbar angeordnet sind. Auf diese Weise können Torsionsmomente zuverlässig verhindert werden. In der Regel wird es ausreichen, entweder die Basisplatte oder die Deckplatte drehbar gegenüber dem Hohlkörper anzuordnen, es ist aber im Sinn der vorliegenden Erfindung nicht ausgeschlossen, sowohl die Basisplatte als auch die Deckplatte drehbar mit dem Hohlkörper zu verbinden.

Besonders günstig ist es, wenn der Hohlkörper aus einer äußeren Schicht aus einem nicht dehnbaren Material und einer Innenschicht oder Innenbeschichtung aus einem dehnbaren, luftdichten Material besteht. Auf diese Weise hängt der mögliche Innendruck des Hohlkörpers nur von der Materialfestigkeit der äußeren Schicht ab und kann daher wesentlich größer sein als bei herkömmlichen aufblasbaren Gegenständen. Die Innenschicht wird dabei mechanisch fast gar nicht belastet, da die Kräfte von der äußeren Schichte abgefangen werden. Auf diese Weise ist es möglich, wesentlich stabilere aufblasbare Möbel herzustellen.

Ein besonders einfacher Aufbau wird dadurch erreicht, dass der Hohlkörper einen im Wesentlichen kreisförmigen Querschnitt aufweist und insgesamt bevorzugter Weise zylindrisch ausgebildet ist. Das Drehgelenk ist dann in besonders bevorzugter Weise im Bereich-der Achse des Zylinders, bzw. im Bereich des Mittelpunktes kreisförmigen Querschnittes angeordnet, so dass eine gleichmäßige Verteilung der Druckspannungen zu erwarten ist.

Besonders begünstigt ist es, wenn das Drehgelenk als lösbare Rastverbindung ausgebildet ist. Beispielsweise kann das Drehgelenk in der Form eines Druckverschlusses dargestellt sein, wie er für Kleidungsstücke verwendet wird. Beim Zusammenbau kann somit der Hohlkörper mit der Basisplatte, bzw. der Deckplatte verbunden werden, wodurch bereits eine vorbestimmte räumliche Relation zwischen diesen Bauteilen vorgegeben ist. Wie bereits oben ausgeführt, ist es aber auch möglich, sowohl die Basisplatte als auch die Deckplatte über solche Rastverbindungen mit dem Hohlkörper zu verbinden, so dass ein fehlerhafter Zusammenbau nahezu ausgeschlossen ist.

Gemäß einer weiteren vorteilhaften Ausgestaltung der Erfindung ist an zumindest einer Seitenfläche des Möbels, beispielsweise an der gesamten Mantelfläche, eine Schutz- oder Dekorschicht aus einem widerstandfähigen Material angeordnet. Weiters kann zwischen der Schutz- oder Dekorschicht und dem mit Überdruck beaufschlagen Hohlkörper ein luftgefüllter Zwischenraum ausgebildet sein, sodass der innen angeordnete Hohlkörper durch die im Abstand dazu angebrachte Schutzschicht vor allfälligen Stichverletzungen oder auch Brandverletzungen durch Zigaretten oder Feuerzeuge geschützt ist. Die Dekorschicht kann dabei aus einem reißfesten, schnittfesten, brandhemmenden, luftdurchlässigen Gewebe bestehen und beispielsweise Werbeaufdrucke wechselbar oder fix aufnehmen.

Gemäß einer weiteren Ausführungsvariante der Erfindung kann im Hohlkörper eine Halterung angeordnet sein, in welche ein Leuchtmittel zur Beleuchtung des Hohlkörpers einsetzbar ist. Bei dieser Ausführungsvariante besteht der Hohlkörper aus lichtdurchlässigen Materialien und beleuchtet so die Schutz- oder Dekorschicht von Innen, sodass deren Werbebotschaft besser zur Geltung gebracht wird.

Die Erfindung wird im folgenden anhand von zum Teil schematischen Zeichnungen näher erläutert. Es zeigen:
- Fig. 1: ein erfindungsgemäßes Möbel in einer Schnittdarstellung;
- Fig. 2: eine Ausführungsvariante des erfindungsgemäßen Möbels in einer Schnittdarstellung gemäß Fig. 1;
- Fig. 3: eine dreidimensionale Ansicht des Möbels gemäß Fig. 2;
- Fig. 4: ein Detail III aus der Darstellung gemäß Fig. 2;
- Fig. 5: eine weitere Ausführungsvariante eines aufblasbaren Möbels in ei- ner Draufsicht; sowie
- Fig. 6: ein weiteres Detail in vergrößertem Maßstab.

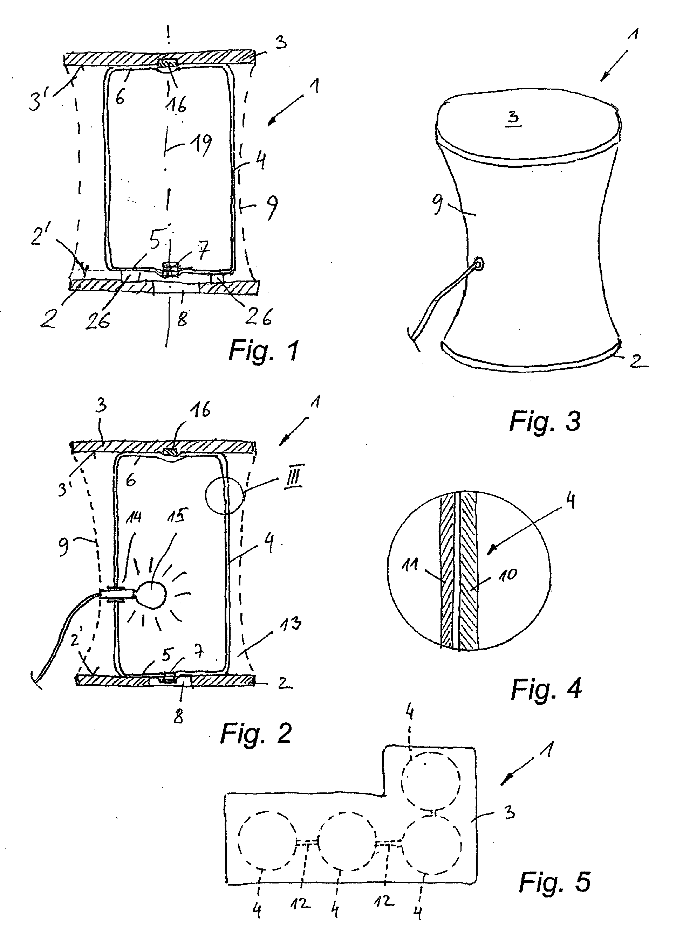

Das in Fig. 1 dargestellte Möbel 1, beispielsweise ein Tisch, weist eine stabile Basisplatte 2 sowie eine stabile Deckplatte 3 auf, wobei zwischen den einander zugekehrten Oberflächen 2' und 3' der Basisplatte 2 sowie der Deckplatte 3 ein aufblasbarer Hohlkörper 4 angeordnet ist, welcher mit Überdruck beaufschlagbar ist.

Der Hohlkörper 4 weist einen im Wesentlichen kreisförmigen Querschnitt auf, wobei die im dargestellten Beispiel runden oder mehreckigen Basis- bzw. Deckplatten 2, 3 den Hohlkörper 4 seitlich überragen und so eine gewisse Schutzfunktion ausüben. Der Hohlkörper 4 ist zylinderförmig ausgebildet und mit seinen Deckflächen 5 und 6 an der Basisplatte 2 bzw. der Deckplatte 3 befestigt, beispielsweise an deren Oberflächen 2', 3' angeklebt. Weiters ist im Hohlkörper 4 ein als Rückschlagventil 7 ausgebildetes Einlassventil vorgesehen, welches bevorzugt im Bereich einer Öffnung 8 der Basisplatte 2 angeordnet ist. Die Basisplatte 2 und die Deckplatte 3 sind durch eine Mantelfläche 9 miteinander verbunden.

Zwischen dem Hohlkörper 4 und der Deckplatte 3 ist ein erstes Drehgelenk 16 vorgesehen, das im Bereich der Achse 19 des zylindrischen Hohlkörpers 4 angeordnet ist. Dies ermöglicht eine freie Verdrehbarkeit des Hohlkörpers 4 gegenüber den Deckplatte 3 zumindest dann, wenn der Hohlkörper 4 noch nicht mit vollem Betriebsdruck beaufschlagt ist. Es ist möglich, dass die Verdrehbarkeit bei vollem Betriebsdruck nicht mehr gegeben ist, da dann die Deckfläche 6 des Hohlkörpers 4 flächig an der Deckplatte 3 anliegt. Dies ist jedoch unkritisch so lange sichergestellt ist, dass zumindest während des Aufblasens des Hohlkörpers 4 eine freie Drehbarkeit der Deckplatte 3 gegenüber dem Hohlkörper 4 gegeben ist, so dass sich ein von Torsionsmomenten freier Zustand einstellen kann.

An der Unterseite des Möbels ist ein weiteres Drehgelenk 26 zwischen dem Hohlkörper 4 und der Basisplatte 2 angeordnet, das im Wesentlichen kreisringförmig ausgebildet ist. Mit einem solchen Drehgelenk 26 ist es möglich, eine sichere Verdrehbarkeit auch bei vollem Betriebsdruck sicherzustellen. Dieses weitere Drehgelenk 26 ist konzentrisch zur Achse 19 angeordnet.

Wie in der Ausführungsvariante gemäß Fig. 2 und Fig. 3 dargestellt, kann die Mantelfläche 9, als eine Schutz- oder Dekorschicht aus einem widerstandsfähigen Material ausgebildet sein. Zwischen der Schutz- oder Dekorschicht 9 und dem mit Überdruck beaufschlagbaren Hohlkörper 4 kann ein luftgefüllter Zwischenraum 13 ausgebildet sein. Die Dekorschicht 9 besteht beispielsweise aus einem reißfesten, brandhemmenden, luftdurchlässigen Gewebe und kann Werbeaufdrucke aufnehmen. Eine wesentliche Funktion der Dekorschicht 9 ist es auch, eine auf Zug beanspruchte Verankerung der beiden Platten 2, 3 zu bilden. Der Hohlkörper 4 drückt die Platten 2, 3 auseinander, so dass eine in sich verspannte Konstruktion entsteht, die sehr stabil ist und auch eine beispielsweise auf einer Tischkante sitzende Person problemlos tragen kann.

Wie im Detail gemäß Fig. 4 dargestellt besteht der Hohlkörper 4 bevorzugt aus einer äußeren Schicht 10 aus einem nicht dehnbaren Material, beispielsweise aus einem Nylongewebe, und einer Innenschicht 11 aus einem dehnbaren, luftdichten Material, z.B. aus einer PU-Folie oder aus Latex. Wesentlich dabei ist, dass sich der Hohlkörper 4 nicht undefiniert verformen kann, sondern ab einem bestimmten Mindestdruck im Wesentlichen durch die Form der Hülle bestimmt ist, die die äußere Schicht 10 bildet. Dadurch kann auch die Zugbelastung der Innenschicht 11 begrenzt werden, so dass diese sehr leicht und dünn ausgebildet werden kann.

Die Mantelfläche 9 weist einen zur Mitte hin abnehmenden Querschnitt auf nimmt dabei im Wesentlichen die Form eines Rotationshyperboloids ein. Dadurch wird nicht nur eine ästhetisch ansprechende Form verwirklicht, es wird auch erreicht, dass die Mantelfläche 9 auch bei Auftreten geringfügiger Produktionstoleranzen überall einigermaßen gleichmäßig gespannt ist, so dass ein kompakter und solider Aufbau erreicht wird, die bei Berührung einen entsprechenden Widerstand entgegensetzt und daher gut manipuliert werden kann und auch einen robusten Eindruck vermittelt.

Zur indirekten Beleuchtung eines Festgeländes oder zu Werbezwecken kann im Hohlkörper 4 eine Halterung 14 angeordnet sein, in welche ein Leuchtmittel 15 zur inneren Beleuchtung des Hohlkörpers 4 einsetzbar ist. Bei einer derartigen Ausführungsvariante besteht der Hohlkörper 4 und eine allfällige Schutz- oder Mantelfläche 9 aus einem lichtdurchlässigen Material.

Bei der in Fig. 5 dargestellten Variante handelt es sich um einen Ecktisch, beispielsweise um eine Bar, welche in Draufsicht dargestellt ist. Es sind hier mehrere, voneinander beabstandete mit Überdruck beaufschlagbare Hohlkörper 4 vorgesehen, die bevorzugt über Druckleitungen 12 miteinander in Verbindung stehen und die jeder für sich ein hier nicht dargestelltes Drehgelenk aufweisen.

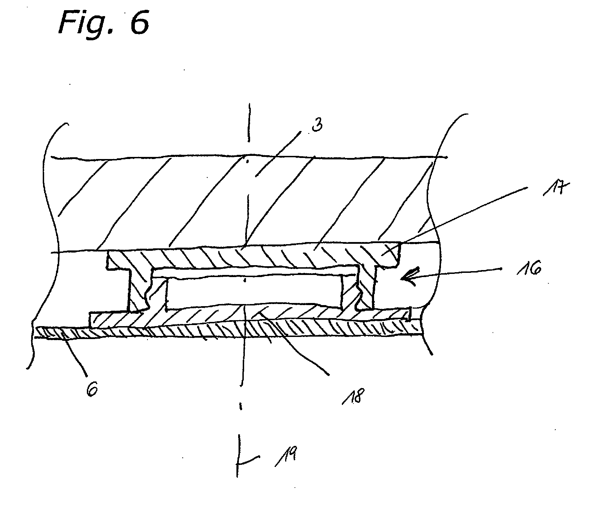

Fig. 6 zeigt in vergrößertem Maßstab den Aufbau eines Drehgelenkes 16 im Detail. An der Deckplatte 3 ist ein Oberteil 17 angeordnet, der im Wesentlichen topfförmig ausgebildet ist. In den Oberteil 17 rastet ein analoger Unterteil 18 ein, der an der Deckfläche 6 des hier nicht näher dargestellten Hohlkörpers 4 angebracht ist. Durch eine Schnappverbindung zwischen den Teilen 17, 18 wird einerseits eine freie Drehbarkeit um die Achse 19 gewährleistet und andererseits eine lösbare Verbindung zwischen der Deckplatte 3 und der Deckfläche 6 des Hohlkörpers 4 hergestellt. Auf diese Weise wird der Zusammenbau des Möbels erleichtert und es werden Fehlerquellen ausgeschlossen.

Das erfindungsgemäße Möbel ermöglicht es, Fehler beim Zusammenbau, bzw. beim Aufstellen auch dann zu vermeiden, wenn diese Tätigkeiten durch ungeübtes Personal durchgeführt werden.

## Patentansprüche

1. Aufblasbares Möbel (1), vorzugsweise Tisch, Stehpult, Ablage, Hocker, Bank, Liege, Bett, oder Werbedisplay oder dgl., mit einer stabilen Basisplatte (2) und einer stabilen Deckplatte (3), zwischen denen zumindest ein mit Überdruck beaufschlagbarer Hohlkörper (4) angeordnet ist, welcher die Deckplatte (3) an der Basisplatte (2) abstützt, sowie mit einer zwischen der Basisplatte (2) und der Deckplatte (3) aufgespannten Mantelfläche (9), **dadurch gekennzeichnet, dass** sich der Hohlkörper (4) in dem mit Überdruck beaufschlagten Zustand über ein Drehgelenk (16, 26) an der Basisplatte (2) und/oder der Deckplatte (3) abstützt.

2. Möbel (1) nach Anspruch 1**, dadurch gekennzeichnet, dass** der Hohlkörper (4) aus einer äußeren Schicht (10) aus einem nicht dehnbaren Material und einer Innenschicht (11) oder Innenbeschichtung aus einem dehnbaren, luftdichten Material besteht.

3. Möbel (1) nach Anspruch 1 oder 2, **dadurch gekennzeichnet, dass** der Hohlkörper (4) einen im Wesentlichen kreisförmigen Querschnitt aufweist.

4. Möbel (1) nach einem der Ansprüche 1 bis 3, **dadurch gekennzeichnet, dass** der Hohlkörper (4) im Wesentlichen zylinderförmig ausgebildet ist und mit seinen Deckflächen (5, 6) an der Basisplatte (2) und an der Deckplatte (3) anliegt.

5. Möbel (1) nach einem der Ansprüche 3 bis 4, **dadurch gekennzeichnet, dass** das Drehgelenk (16, 26) im Bereich einer Längsachse (19) des Hohlkörpers (4) angeordnet ist.

6. Möbel (1) nach einem der Ansprüche 1 bis 5, **dadurch gekennzeichnet, dass** das Drehgelenk (16, 26) als lösbare Rastverbindung ausgebildet ist.

7. Möbel (1) nach einem der Ansprüche 1 bis 6, **dadurch gekennzeichnet, dass** mehrere, voneinander beabstandete mit Überdruck beaufschlagbare Hohlkörper (4) vorgesehen sind, die bevorzugt über Druckleitungen (12) miteinander in Verbindung stehen.

8. Möbel (1) nach einem der Ansprüche 1 bis 7, **dadurch gekennzeichnet, dass** in zumindest einem der Hohlkörper (4) ein als Rückschlagventil (7) ausgebildetes Einlassventil vorgesehen ist, welches bevorzugt im Bereich einer Öffnung (8) der Basisplatte (2) angeordnet ist.

9. Möbel (1) nach einem der Ansprüche 1 bis 8, **dadurch gekennzeichnet, dass** die Mantelfläche (9) als Schutz- oder Dekorschicht aus einem widerstandsfähigen Material ausgebildet ist.

10. Möbel (1) nach einem der Ansprüche 1 bis 9, **dadurch gekennzeichnet, dass** zwischen der Mantelfläche (9) und dem mit Überdruck beaufschlagbaren Hohlkörper (4) ein luftgefüllter Zwischenraum (13) ausgebildet ist.

11. Möbel (1) nach einem der Ansprüche 1 bis 10, **dadurch gekennzeichnet, dass** der Hohlkörper (4) und die Mantelfläche (9) aus einem lichtdurchlässigen Material bestehen und im Hohlkörper (4) eine Halterung (14) angeordnet ist, in welche ein Leuchtmittel (15) zur inneren Beleuchtung des Hohlkörpers (4) einsetzbar ist.

12. Möbel (1) nach einem der Ansprüche 1 bis 11, **dadurch gekennzeichnet, dass** der Hohlkörper (4) und/oder die Mantelfläche (9) einen zur Mitte hin abnehmenden Querschnitt aufweisen und vorzugsweise im Wesentlichen ein Rotationshyperboloid darstellen.

## Claims

1. Inflatable piece of furniture (1), preferably a table, high desk, rack, taboret, bench, couch, bed or advertising display and the like, comprising a stable base plate (2) and a stable top plate (3), between which is placed at least one hollow body (4), which is pressurized and which, resting against the base plate (2), supports the top plate (3), and further comprising a wall surface (9) extending between the base plate (2) and the top plate (3), **characterised in that** the hollow body (4) in its pressurized state rests against the base plate (2) and/or the top plate (3) via a rotary joint (16, 26).

2. Piece of furniture (1) according to claim 1, **characterised in that** the hollow body (4) consists of an outer layer (10) of non-stretchable material and an inner layer (11) or inner coating of stretchable, airtight material.

3. Piece of furniture (1) according to claim 1 or 2, **characterised in that** the hollow body (4) has an essentially circular cross-section.

4. Piece of furniture (1) according to any of claims 1 to 3, **characterised in that** the hollow body (4) is essentially cylindrical and lies with its top and bottom face (5, 6) against the base plate (2) and the top plate (3).

5. Piece of furniture (1) according to any of claims 3 to 4, **characterised in that** the rotary joint (16, 26) is positioned in the area of a longitudinal axis (19) of the hollow body (4).

6. Piece of furniture (1) according to any of claims 1 to 5, **characterised in that** the rotary joint (16, 26) is configured as a releasable snap-on connection.

7. Piece of furniture (1) according to any of claims 1 to 6, **characterised in that** a plurality of hollow bodies (4) are provided, which can be pressurized and are at a certain distance from each other, and which are preferably interconnected by means of pressure lines (12).

8. Piece of furniture (1) according to any of claims 1 to 7, **characterised in that** at least one of the hollow bodies (4) is provided with an inlet valve configured as a check valve (7), which preferably is situated in the area of an opening (8) of the base plate (2).

9. Piece of furniture (1) according to any of claims 1 to 8, **characterised in that** the wall surface (9) is made of wear-resistant material and serves as protective or decorating layer.

10. Piece of furniture (1) according to any of claims 1 to 9, **characterised in that** an air-filled intermediary space (13) is provided between the wall surface (9) and the pressurized hollow body (4).

11. Piece of furniture (1) according to any of claims 1 to 10, **characterised in that** the hollow body (4) and the wall surface (9) are made of translucent material, and that a holder (14) is provided in the hollow body (4), into which a lighting means (15) may be inserted to illuminate the interior of the hollow body (4).

12. Piece of furniture (1) according to any of claims 1 to 11, **characterised in that** the hollow body (4) and/or the wall surface (9) has a cross-section which is at a minimum at half-height and preferably essentially has the shape of a hyperboloid of rotation.

## Revendications

1. Meuble gonflable (1) de préférence table, pupitre, étagère, tabouret, banc, couchette, lit ou support publicitaire ou analogues, comportant une plaque de base (2) solide et une plaque de couverture (3) solide, entre lesquelles se trouve au moins un corps creux (4) susceptible d'être mis en pression, qui soutient la plaque de couverture (3) sur la plaque de base (2), ainsi qu'une surface-enveloppe (9) tendue entre la plaque de base (2) et la plaque de couverture (3),
meuble gonflable **caractérisé en ce qu'**
à l'état mis en pression, le corps creux (4) s'appuie sur la plaque de base (2) et/ou la plaque de couverture (3) par une articulation tournante (16, 26).

2. Meuble (1) selon la revendication 1,
**caractérisé en ce que**
le corps creux (4) se compose d'une couche extérieure (10) en une matière non extensible et d'une couche intérieure (11) ou d'un revêtement intérieur en une matière extensible, étanche à l'air.

3. Meuble (1) selon la revendication 1 ou 2,
**caractérisé en ce que**
le corps creux (4) a une section essentiellement circulaire.

4. Meuble (1) selon l'une des revendications 1 à 3,
**caractérisé en ce que**
le corps creux (4) a une forme essentiellement cylindrique et s'applique par ses surfaces de couverture (5, 6) contre la plaque de base (2) et la plaque de couverture (3).

5. Meuble (1) selon les revendications 3 et 4,
**caractérisé en ce que**
l'articulation tournante (16, 26) se trouve au niveau de l'axe longitudinal (19) du corps creux (4).

6. Meuble (1) selon l'une des revendications 1 à 5,
**caractérisé en ce que**
l'articulation tournante (16, 26) est une liaison à enclipsage, amovible.

7. Meuble (1) selon l'une des revendications 1 à 6,
**caractérisé par**
plusieurs corps creux (4) susceptibles d'être mis en pression, écartés les uns des autres, et de préférence reliés par des conduites de pression (12).

8. Meuble (1) selon l'une des revendications 1 à 7,
**caractérisé en ce qu'**
au moins l'un des corps creux (4) comporte une soupape d'entrée, en forme de clapet antiretour (7), située de préférence au niveau d'une ouverture (8) de la plaque de base (2).

9. Meuble (1) selon l'une des revendications 1 à 8,
**caractérisé en ce que**
la surface-enveloppe (9) est réalisée sous la forme d'une couche de protection ou de décoration en une matière résistante.

10. Meuble (1) selon l'une des revendications 1 à 9,
**caractérisé par**
un espace intermédiaire (13) rempli d'air entre la surface-enveloppe (9) et le corps creux (4) mis en pression.

11. Meuble (1) selon l'une des revendications 1 à 10,
**caractérisé en ce que**
le corps creux (4) et la surface-enveloppe (9) sont en une matière transparente/translucide et le corps creux (4) comporte un support (14) recevant un moyen d'éclairage (15) pour l'éclairage intérieur du corps creux (4).

12. Meuble (1) selon l'une des revendications 1 à 11,
**caractérisé en ce que**
le corps creux (4) et/ou la surface-enveloppe (9) ont une section décroissante vers le milieu et correspondant de préférence pratiquement à un hyperboloïde de rotation.
